(19) Europäisches Patentamt
European Patent Office
Office européen des brevets

(11) **EP 4 496 242 A1**

(12) **EUROPEAN PATENT APPLICATION**
published in accordance with Art. 153(4) EPC

(43) Date of publication:
**22.01.2025 Bulletin 2025/04**

(21) Application number: **23794814.6**

(22) Date of filing: **14.03.2023**

(51) International Patent Classification (IPC):
***H04J 3/16*** *(2006.01)*

(52) Cooperative Patent Classification (CPC):
**H04J 3/16**

(86) International application number:
**PCT/CN2023/081247**

(87) International publication number:
**WO 2023/207378 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.04.2022 CN 202210454858**

(71) Applicant: **Huawei Technologies Co., Ltd.
Shenzhen, Guangdong 518129 (CN)**

(72) Inventors:
• **YANG, Chunsheng**
  **Shenzhen, Guangdong 518129 (CN)**
• **ZHONG, Qiwen**
  **Shenzhen, Guangdong 518129 (CN)**
• **WANG, Renlei**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SLOT ALLOCATION METHOD AND RELATED DEVICE**

(57)     Embodiments of this application disclose a slot allocation method and a related device, which are applied to a network carrying fixed services. The slot allocation method includes: determining a palindromic sequence based on a total quantity of available slots. A quantity of bases in the palindromic sequence is the same as the total quantity of available slots. That is, a length of the palindromic sequence is the same as the total quantity of slots, and a slot allocation result obtained based on the palindromic sequence corresponds to the total quantity of slots. Therefore, there is no need to introduce an idle service or a queuing mechanism. This reduces hardware overheads generated during slot allocation.

FIG. 2

EP 4 496 242 A1

## Description

This application claims priority to Chinese Patent Application No. 202210454858.X, filed with the China National Intellectual Property Administration on April 24, 2022 and entitled "SLOT ALLOCATION METHOD AND RELATED DEVICE", which is incorporated herein by reference in its entirety.

## TECHNICAL FIELD

Embodiments of this application relate to the communication field, and in particular, to a slot allocation method and a related device.

## BACKGROUND

In a network (for example, an in-vehicle network) carrying fixed services, to reduce implementation cost of the network and ensure service parallelism, a slot division manner is used to carry the services, and a slot is automatically allocated to each service.

Automatic slot allocation may be implemented by using a service bandwidth configuration table and a slot allocation algorithm. Specifically, the slot allocation algorithm is a binary palindromic parallel algorithm. $n$ bases are determined based on a binary representation of a quantity of slots required by the service, where a quantity of slots indicated by an $n^{\text{th}}$ basis is $\beta_n = 2^{n-1}$. Then, a binary palindromic sequence whose length is $Q = 2^n - 1$ is obtained by arranging $\beta_n$ in a palindromic order, to determine a service to which each slot is allocated and complete automatic slot allocation.

However, in slot allocation results obtained by using the foregoing solution, a result of one allocation may be that zero slots or a plurality of slots are allocated. During hardware implementation, an idle service or a queuing mechanism needs to be introduced to ensure that allocated slots are exactly equal to a total quantity of slots. This increases hardware overheads.

## SUMMARY

Embodiments of this application provide a slot allocation method and a related device, to reduce hardware overheads. Embodiments of this application further provide a corresponding system, a computer device, a computer-readable storage medium, and the like.

A first aspect of this application provides a slot allocation method. The method includes: obtaining a first total quantity of slots and a first quantity of slots required by a first service; determining a first palindromic sequence based on the first total quantity of slots, where the first palindromic sequence includes a plurality of first bases whose quantity is the same as the first total quantity of slots, and each type of first basis in the plurality of first bases indicates a quantity of slots of the first basis; and allocating a slot to the first service based on the first quantity of slots, where the first quantity of slots is represented as a sum of products of each type of first basis and a corresponding first basis coefficient, and the first basis coefficient is used to determine the quantity of slots, of the first basis, to be occupied by the first service.

In this application, an in-vehicle gateway of an in-vehicle network provides a communication interface. On the communication interface, $P_1$ slots are obtained through slot division. That is, the first total quantity of slots is $P_1$. Data exchange and communication for the first service are implemented through the communication interface.

The first palindromic sequence in this application may be understood as a first palindromic sequence obtained by truncating a binary palindromic sequence generated based on a binary representation.

In this application, to allocate the slot to the first service, a binary representation of the first quantity of slots based on the first total quantity $P_1$ of slots needs to be determined. In other words, the first quantity of slots is represented as the sum of the products of each type of first basis and the corresponding first basis coefficient. After the quantity of slots of the first basis is determined, a quantity of slots specifically occupied by the service when the service occupies one basis may be determined, and the first basis coefficient is determined accordingly, so that slot allocation for the first service can be completed.

According to the first aspect, a quantity of bases in a palindromic sequence is the same as a total quantity of available slots. That is, a length of the palindromic sequence is the same as the total quantity of slots, and a slot allocation result obtained based on the palindromic sequence corresponds to the total quantity of slots. Therefore, there is no need to introduce an idle service or a queuing mechanism. This reduces hardware overheads generated during slot allocation.

In a possible implementation of the first aspect, the step of the determining a first palindromic sequence based on the first total quantity of slots includes: enabling a binary counter to count from zero to the first total quantity of slots; and outputting the plurality of first bases based on a carry result or a toggle result of the binary counter, to obtain the first palindromic sequence.

In this possible implementation, the first palindromic sequence may be specifically determined by using the binary counter, which improves implementability of the solution.

In a possible implementation of the first aspect, the step of the determining a first palindromic sequence based on the first total quantity of slots includes: obtaining a preset slot-sequence mapping table, where the slot-sequence mapping table includes a mapping relationship between the first total quantity of slots and the first palindromic sequence; and determining the first palindromic sequence based on the first total quantity of slots and the mapping relationship.

In this possible implementation, the first palindromic sequence may be specifically determined by using the preset slot-sequence mapping table, which improves implementability of the solution.

In a possible implementation of the first aspect, after the step of the allocating a slot to the first service based on the first quantity of slots, the method further includes: obtaining a second total quantity of slots and a second quantity of slots required by a second service, where the second total quantity of slots is a difference between the first total quantity of slots and the first quantity of slots; determining a second palindromic sequence based on the second total quantity of slots, where the second palindromic sequence includes a plurality of second bases whose quantity is the same as the second total quantity of slots, and each type of second basis in the plurality of second bases indicates a quantity of slots of the second basis; and allocating a slot to the second service based on the second quantity of slots, where the second quantity of slots is represented as a sum of products of each type of second basis and a corresponding second basis coefficient, and the second basis coefficient is used to determine the quantity of slots, of the second basis, to be occupied by the second service.

In this possible implementation, the slot allocation method may be applied to slot allocation for a plurality of services, and slot allocation for the plurality of services is implemented based on a serial architecture. This avoids a problem that the plurality of services contend for a same slot resource, and facilitates implementation of slot allocation hardware.

In a possible implementation of the first aspect, the method further includes: sequentially determining, based on different clock signals, whether the first service and/or the second service occupy/occupies a slot corresponding to a current clock signal; and sequentially outputting, based on determining results, services carried in all slots.

In this possible implementation, slot allocation results are sequentially output by using a pipeline structure, so that it can be ensured that each clock outputs a service to which a current slot is allocated, to improve user experience.

A second aspect of this application provides a slot allocation method. The method includes: obtaining a total quantity of slots, a first quantity of slots required by a first service, and a second quantity of slots required by a second service; determining a palindromic sequence based on the total quantity of slots, where the palindromic sequence includes a plurality of bases whose quantity is greater than or equal to a maximum quantity of slots, the maximum quantity of slots is a largest value between the first quantity of slots and the second quantity of slots, and each type of basis in the plurality of bases indicates a quantity of slots of the basis; and allocating slots to the first service and the second service based on the first quantity of slots and the second quantity of slots, where the first quantity of slots and the second quantity of slots each are represented as a sum of products of each type of basis and a corresponding basis coefficient, and the basis coefficient is used to determine a quantity of slots, of the basis, to be occupied by each of the first service and the second service.

In this application, an in-vehicle gateway of an in-vehicle network provides a communication interface. On the communication interface, $P$ slots are obtained through slot division. That is, the total quantity of slots is $P$. Data exchange and communication for the first service and the second service are implemented through the communication interface.

In this application, in the slot allocation method, even resource allocation for a plurality of services is implemented based on a parallel architecture.

The palindromic sequence in this application may be understood as a palindromic sequence obtained by truncating a binary palindromic sequence generated based on a binary representation, and the first service and the second service share one palindromic sequence.

According to the second aspect, the quantity of the plurality of bases in the palindromic sequence is greater than or equal to the maximum quantity of slots, a length $Q$ of the palindromic sequence is not limited by $Q = 2^n - 1$, and there is no need to introduce an idle service to a slot allocation result obtained based on the palindromic sequence. This reduces hardware overheads generated during slot allocation.

In a possible implementation of the second aspect, the step of the determining a palindromic sequence based on the total quantity of slots includes: enabling a binary counter to count from zero to the total quantity of slots; and outputting the plurality of bases based on a carry result or a toggle result of the binary counter, to obtain the palindromic sequence.

In this possible implementation, the palindromic sequence may be specifically determined by using the binary counter, which improves implementability of the solution.

In a possible implementation of the second aspect, the step of the determining a palindromic sequence based on the total quantity of slots includes: obtaining a preset slot-sequence mapping table, where the slot-sequence mapping table includes a mapping relationship between the total quantity of slots and the palindromic sequence; and determining the palindromic sequence based on the total quantity of slots and the mapping relationship.

In this possible implementation, the palindromic sequence may be specifically determined by using the preset slot-sequence mapping table, which improves implementability of the solution.

A third aspect of this application provides a slot allocation system. The slot allocation system is configured to perform the method according to any one of the first aspect or the possible implementations of the first aspect. Specifically, a computer device includes modules or units configured to perform the method according to any one of the first aspect or the possible implementations of the first aspect, for example, a slot obtaining unit, a sequence determining unit, a slot allocation unit, and a slot judging unit.

A fourth aspect of this application provides a slot allocation system. The slot allocation system is configured to perform the method according to any one of the second aspect or the possible implementations of the second aspect. Specifically, a computer device includes modules or units configured to perform the method according to any one of the second aspect or the possible implementations of the second aspect, for example, a slot obtaining unit, a sequence determining unit, and a slot allocation unit.

A fifth aspect of this application provides a computer device. The computer device includes a processor, a communication interface, and a memory. The memory is configured to store program code. The processor is configured to invoke the program code in the memory, so that the processor performs the method according to any one of the first aspect or the possible implementations of the first aspect.

A sixth aspect of this application provides a computer device. The computer device includes a processor, a communication interface, and a memory. The memory is configured to store program code. The processor is configured to invoke the program code in the memory, so that the processor performs the method according to any one of the second aspect or the possible implementations of the second aspect.

A seventh aspect of this application provides a computer-readable storage medium storing one or more computer-executable instructions. When the computer-executable instructions are executed by a processor, the processor performs the method according to any one of the first aspect or the possible implementations of the first aspect.

An eighth aspect of this application provides a computer-readable storage medium storing one or more computer-executable instructions. When the computer-executable instructions are executed by a processor, the processor performs the method according to any one of the second aspect or the possible implementations of the second aspect.

A ninth aspect of this application provides a computer program product storing one or more computer-executable instructions. When the computer-executable instructions are executed by a processor, the processor performs the method according to any one of the first aspect or the possible implementations of the first aspect.

A tenth aspect of this application provides a computer program product storing one or more computer-executable instructions. When the computer-executable instructions are executed by a processor, the processor performs the method according to any one of the second aspect or the possible implementations of the second aspect.

An eleventh aspect of this application provides a chip system. The chip system includes at least one processor and an interface. The interface is configured to receive data and/or a signal. The at least one processor is configured to support a computer device in implementing the function according to any one of the first aspect or the possible implementations of the first aspect. In a possible design, the chip system further includes a memory. The memory is configured to store program instructions and data that are necessary for the computer device. The chip system may include a chip, or may include a chip and another discrete device.

A twelfth aspect of this application provides a chip system. The chip system includes at least one processor and an interface. The interface is configured to receive data and/or a signal. The at least one processor is configured to support a computer device in implementing the function according to any one of the second aspect or the possible implementations of the second aspect. In a possible design, the chip system further includes a memory. The memory is configured to store program instructions and data that are necessary for the computer device. The chip system may include a chip, or may include a chip and another discrete device.

In embodiments of this application, the quantity of the bases in the palindromic sequence is the same as the total quantity of available slots. That is, the length of the palindromic sequence is the same as the total quantity of slots, and the slot allocation result obtained based on the palindromic sequence corresponds to the total quantity of slots. Therefore, there is no need to introduce an idle service or a queuing mechanism. This reduces hardware overheads generated during slot allocation.

## BRIEF DESCRIPTION OF DRAWINGS

FIG. 1 is an application architectural diagram of an in-vehicle network according to an embodiment of this application;
FIG. 2 is a diagram of an embodiment of a slot allocation method according to an embodiment of this application;
FIG. 3 is a diagram of a binary palindromic sequence according to an embodiment of this application;
FIG. 4 is a diagram of a first palindromic sequence according to an embodiment of this application;

FIG. 5 is a diagram of determining a first palindromic sequence by a binary counter according to an embodiment of this application;

FIG. 6 is a diagram of a slot allocation result according to an embodiment of this application;

FIG. 7 is a diagram of all possible slot allocation results in a case of a fixed first total quantity of slots according to an embodiment of this application;

FIG. 8 is a diagram of a binary palindromic module according to an embodiment of this application;

FIG. 9 is a diagram of another embodiment of a slot allocation method according to an embodiment of this application;

FIG. 10 is a diagram of a slot allocation result according to an embodiment of this application;

FIG. 11 is a diagram of a binary palindromic serial architecture according to an embodiment of this application;

FIG. 12 is a diagram of an embodiment of outputting a slot allocation result according to an embodiment of this application;

FIG. 13 is a diagram of another embodiment of a slot allocation method according to an embodiment of this application;

FIG. 14 is a diagram of a binary palindromic parallel architecture according to an embodiment of this application;

FIG. 15 is a diagram of an embodiment of a slot allocation system according to an embodiment of this application;

FIG. 16 is a diagram of another embodiment of a slot allocation system according to an embodiment of this application; and

FIG. 17 is a diagram of an embodiment of a computer device according to an embodiment of this application.

## DESCRIPTION OF EMBODIMENTS

The following describes embodiments of this application with reference to accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that data used in this way is interchangeable in appropriate circumstances, so that embodiments described herein can be implemented in an order other than the order illustrated or described herein. In addition, the terms "include", "have", and variants thereof are intended to cover non-exclusive inclusion. For example, a process, method, system, product, or device that includes a series of steps or units is not necessarily limited to those clearly listed steps or units, but may include other steps or units that are not clearly listed or are inherent to such a process, method, product, or device.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

Embodiments of this application provide a slot allocation method and a related device, to reduce hardware overheads. Embodiments of this application further provide a corresponding system, a computer device, a computer-readable storage medium, and the like. Details are separately described in the following.

The following describes an example of an application scenario of embodiments of this application.

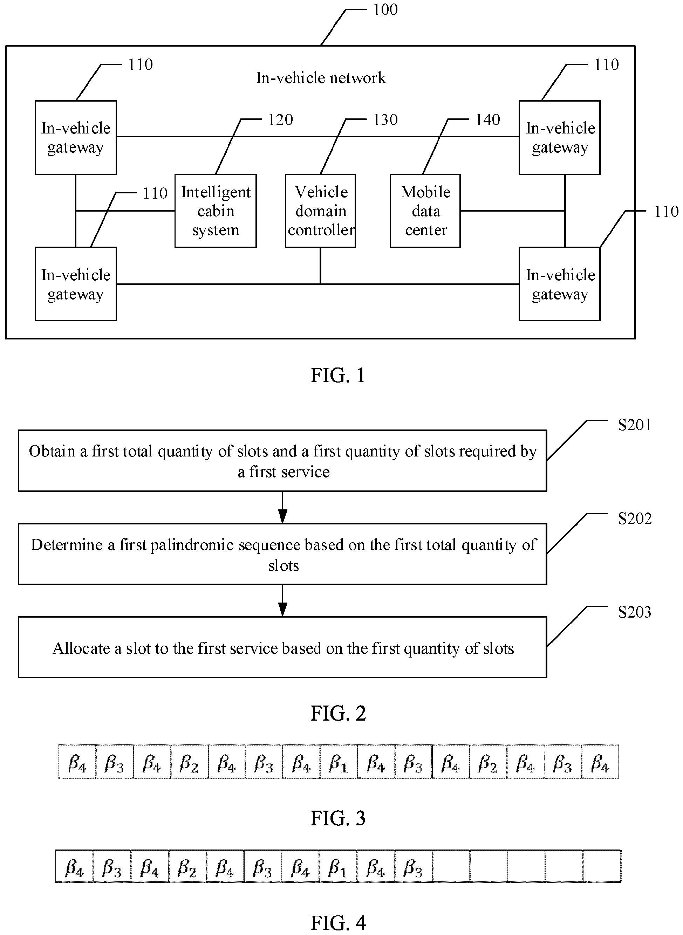

As shown in FIG. 1, a ring network structure of an in-vehicle network 100 that includes a plurality of in-vehicle gateways 110 and devices carries all services of vehicle communication. The in-vehicle network 100 uses communication interfaces provided by the distributed in-vehicle gateways 110 to transmit signals of an electronic control unit (electronic control unit, ECU), a sensor, and the like on a vehicle to computing control centers such as an intelligent cabin system 120 (CDC), a vehicle domain controller 130 (vehicle domain controller, VDC), and a mobile data center (mobile data center, MDC) 140. Signals of these computing control centers are forwarded to corresponding devices such as the electronic control unit and the sensor. A device such as an in-vehicle T-BOX may be further connected to the ring network including the plurality of in-vehicle gateways 110. Compared with a general communication network, the in-vehicle network 100 is a relatively static network. In an entire life cycle, a quantity and a bandwidth of the services carried by the in-vehicle network 100 do not change, and are determined at the beginning of vehicle design. A requirement for dynamically adjusting the service does not occur in the in-vehicle service especially when the vehicle is in a traveling state. Therefore, the service carried by the in-vehicle network 100 is fixed and static. In addition, to ensure safe driving, adequate security and reliability need to be ensured for the in-vehicle network 100.

Based on a requirement of the in-vehicle network, the service is carried in a slot division manner, and different hard pipes are established for different services. This improves reliability of the in-vehicle network and minimizes implementation cost of the in-vehicle gateway while ensuring the service bandwidth and latency. The service is carried in the slot division manner. Specifically, a bandwidth of the communication interface is divided into a specific quantity of slots based on a slot granularity, and a quantity of required slots is determined by the service based on the bandwidth. For example, in a 10 Gbps communication interface provided by the in-vehicle gateway, 1000 slots may be obtained through division based on a granularity of 10 Mbps. For a 10 Mbps service, only one slot is required. For a 100 Mbps service, 10 slots are required. For a 1000 Mbps service, 100 slots are required. The 10 Gbps interface needs to carry a plurality of services, allocate adequate slots to each service, and ensure that the allocated slots are even. This helps reduce the implementation cost.

The following describes, with reference to the foregoing application scenario by using examples, a procedure of a slot allocation method provided in embodiments of this application.

As shown in FIG. 2, an embodiment of a slot allocation method provided in embodiments of this application includes the following steps.

S201: Obtain a first total quantity of slots and a first quantity of slots required by a first service.

An in-vehicle gateway of an in-vehicle network provides a communication interface. On the communication interface, $P_1$ slots are obtained through slot division. That is, the first total quantity of slots is $P_1$. Data exchange and communication for the first service are implemented through the communication interface. The first quantity $C_1$ of slots required by the first service further needs to be obtained, to allocate the slot on the communication interface to the first service.

S202: Determine a first palindromic sequence based on the first total quantity of slots.

After the first total quantity $P_1$ of slots is obtained, the first palindromic sequence is determined based on the first total quantity $P_1$ of slots. The first palindromic sequence may be understood as first palindromic sequence obtained by truncating a binary palindromic sequence generated based on a binary representation. The first palindromic sequence includes a plurality of first bases. A quantity of the plurality of first bases is the same as the first total quantity of slots. Each type of first basis in the plurality of first bases indicates a quantity of slots of the first basis.

A quantity of slots required by any service is $C_i$, and may be represented in binary as $C_i = a_{i,1} + a_{i,2} \times 2 + \cdots + a_{i,n} \times 2^{n-1}$, where a coefficient $a_{i,n} \in \{0,1\}$. In this binary representation, the quantity of slots required by the service is naturally divided into n bases, and quantities that are of slots and that correspond to all the bases are $\beta_1 = 2^0$, $\beta_2 = 2^1$, ..., and $\beta_n = 2^{n-1}$. The coefficient of each basis $a_{i,n} = 0$ indicates that a slot of the basis is not occupied, and $a_{i,n} = 1$ indicates that the slot of the basis is occupied. For example, a quantity of slots required by a service is $C_i = 9 = 1 + 0 \times 2 + 0 \times 2^2 + 1 \times 2^3 = 1 \times \beta_1 + 0 \times \beta_2 + 0 \times \beta_3 + 1 \times \beta_4$. The quantity of slots may be divided into n = 4 bases, and quantities that are of slots and that correspond to all the bases are $\beta_1 = 1$, $\beta_2 = 2$, $\beta_3 = 4$, $and$ $\beta_4 = 8$. A palindromic sequence is a uniform sequence formed by arranging, in a palindromic order, quantities that are of slots and that correspond to n parts. Because a quantity of slots corresponding to each part is twice a quantity of slots corresponding to a previous part, the palindromic sequence may also be referred to as a binary palindromic sequence. The binary palindromic sequence is generated based on a binary representation. As shown in FIG. 3, in a binary palindromic sequence with n = 4, two $\beta_2$ are inserted before and after $\beta_1$ respectively, four $\beta_3$ each are inserted between $\beta_1$ and $\beta_2$, and eight $\beta_4$ each are inserted between $\beta_1$, $\beta_2$, and $\beta_3$.

It can be learned from the foregoing that, a length of the binary palindromic sequence generated based on the binary representation is $Q' = 2^n - 1$. However, a length $Q$ of the first palindromic sequence needs to be equal to the first total quantity $P_1$ of slots. Therefore, a case in which $Q \neq 2^n - 1$ exists. In this case, the first palindromic sequence may be determined by truncating the binary palindromic sequence generated based on the binary representation. When $Q \neq 2^n - 1$, there is definitely an n such that $Q < Q' = 2^n - 1$. A palindromic sequence whose length is $Q$ is a segment of the palindromic sequence whose length is $Q' = 2^n - 1$. In other words, the palindromic sequence whose length is $Q$ is truncated from the palindromic sequence whose length is $Q'$, to obtain the first palindromic sequence. The first palindromic sequence includes the plurality of first bases. The plurality of first bases are a part of bases in the palindromic sequence whose length is $Q'$. The quantity of the plurality of first bases is the same as the first total quantity $P_1$ of slots. In other words, $Q = P_1$.

It should be noted that, when the first total quantity of slots $P_1 = Q = 2^{n-1}$, the first palindromic sequence is the binary palindromic sequence generated based on the binary representation, which is equivalent to that the entire binary palindromic sequence generated based on the binary representation is truncated, to obtain the first palindromic sequence.

For example, as shown in FIG. 4, $n = 4$, and a first palindromic sequence whose length is $Q = P_1 = 10$ is obtained through consecutive truncation, of a palindromic sequence whose length is $Q' = 15$, starting from a 1st basis. It should be noted that truncation may be consecutive truncation starting from the 1st basis, or may be consecutive truncation starting from a 2nd basis or a 3rd basis, or may be non-consecutive truncation, provided that the length of truncation is $Q = 10 = P_1$. This is not limited in embodiments of this application.

Optionally, in an actual process of determining the first palindromic sequence, there are specifically two optional implementations, which are separately described below.

1. Determining by using a binary counter:

During determining of the first palindromic sequence, the binary counter is enabled to count from zero to the first total quantity of slots, and the plurality of first bases are output based on a carry result or a toggle result of the binary counter, to obtain the first palindromic sequence. The binary counter may be preconfigured in a system for performing the slot allocation method provided in this embodiment of this application.

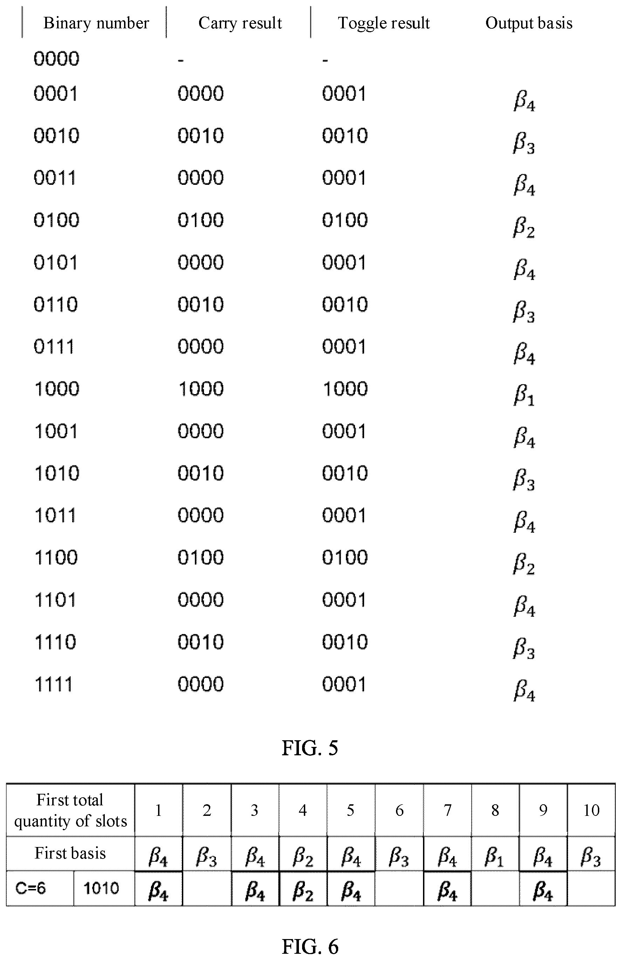

Specifically, as shown in FIG. 5, a binary number of the binary counter is set to zero. On each clock, the binary counter increments the binary number once, and determines whether a carry is generated for the binary number. If the carry is generated, a basis $\beta_i$ is determined based on an $i^{th}$ bit where the carry is generated. If there is no carry, it is determined that the basis is a most significant bit of the binary number. When the binary counter increments to $P_1$ that is represented in binary, the binary number of the binary counter is set to zero, and the plurality of obtained first bases are arranged to generate a sequence. In this way, the first palindromic sequence is obtained.

2. Determining by using a mapping table:

During determining of the first palindromic sequence, a preset slot-sequence mapping table is obtained, where the slot-sequence mapping table includes a mapping relationship between the first total quantity of slots and the first palindromic sequence; and the first palindromic sequence is determined based on the first total quantity of slots and the mapping relationship.

Specifically, as shown in Table 1, a first palindromic sequence corresponding to each possible first total quantity of slots is predetermined and stored in the slot-sequence mapping table. During determining of the first palindromic sequence, the corresponding first palindromic sequence may be directly obtained by inputting the first total quantity of slots.

**Table 1**

| First total quantity of slots | First palindromic sequence |
|---|---|
| 1 | $\beta_1$ |
| 2 | $\beta_2\beta_1\beta_2$ |
| 3 | $\beta_3\beta_2\beta_3\beta_1\beta_3\beta_2\beta_3$ |
| 4 | $\beta_4\beta_3\beta_4\beta_2\beta_4\beta_3\beta_4\beta_1\beta_4\beta_3\beta_4\beta_2\beta_4\beta_3\beta_4$ |
| … | … |

After the first palindromic sequence is obtained, the quantity of slots, of the first basis, indicated by each type of first basis in the plurality of first bases further needs to be determined based on the first total quantity of slots.

Optionally, the first palindromic sequence is converted into a binary representation in which coefficients are all 1, namely, $P_1 = 1 \times \beta_1 + 1 \times \beta_2 + \cdots + 1 \times \beta_n$. According to formulas:

$$\beta_n = [P/2], \beta_{n-1} = [(P - \beta_n)/2], \dots, \text{and } \beta_1 = [(P - \beta_n - \beta_{n-1} - \cdots - \beta_2)/2]$$

the quantity of slots, of the first basis, indicated by each type of first basis in the plurality of first bases may be determined.

For example, $P_1 = 10$, $\beta_4 = \left[\frac{P_1}{2}\right] = \left[\frac{10}{2}\right] = 5$, $\beta_3 = \left[\frac{P_1 - \beta_4}{2}\right] = \left[\frac{5}{2}\right] = 3$, $\beta_2 = \left[\frac{P_1 - \beta_4 - \beta_3}{2}\right] = \left[\frac{2}{2}\right] = 1$, and $\beta_1 = \left[\frac{P_1 - \beta_4 - \beta_3 - \beta_2}{2}\right] = \left[\frac{1}{2}\right] = 1$. Therefore, a quantity of slots, of the first basis, indicated by $\beta_4$ is output as 5; a quantity of slots, of the first basis, indicated by $\beta_3$ is output as 3; a quantity of slots, of the first basis, indicated by $\beta_2$ is 1; and a quantity of slots, of the first basis, indicated by $\beta_1$ is 1.

S203: Allocate a slot to the first service based on the first quantity of slots.

The first quantity of slots is represented as a sum of products of each type of first basis and a corresponding first basis coefficient. The first basis coefficient is used to determine the quantity of slots, of the first basis, to be occupied by the first service. To allocate the slot to the first service, a binary representation of the first quantity of slots based on the first total quantity $P_1$ of slots needs to be determined. In other words, the first quantity of slots is represented as the sum of the products of each type of first basis and the corresponding first basis coefficient. After the quantity of slots of the first basis is determined, a quantity of slots specifically occupied by the service when the service occupies one basis may be determined, and the first basis coefficient is determined accordingly, so that slot allocation for the first service can be completed.

Specifically, after the first palindromic sequence is determined, a plurality of iterations are performed to determine the binary representation of the first quantity of slots based on the first total quantity $P_1$ of slots, to implement slot allocation for the first service. For example, it is assumed that the first total quantity of slots is P, the quantity of slots required by the service is $C$, and a quantity of bits is n. It is given that $P_1 = P$ and $C_1 = C$. In a 1st iteration, $\beta_n = \lceil P_1/2 \rceil$ and $P_2 = P_1 - \beta_n$ are calculated. If $C_1 > \beta_n$, $a_n = 1$, and $C_2 = C_1 - \beta_n$. If $C_1 < \beta_n$, $a_n = 0$, and $C_2 = C_1$. In a 2nd iteration, $\beta_{n-1} = \lceil P_2/2 \rceil$ and $P_3 = P_2 - \beta_{n-1}$ are calculated. If $C_2 > \beta_{n-1}$, $a_{n-1} = 1$, and $C_3 = C_2 - \beta_{n-1}$. If $C_2 < \beta_{n-1}$, $a_{n-1} = 0$, and $C_3 = C_2$. A total of n iterations are performed in this way. As a result, the binary representation of the value of C based on the first total quantity $P_1$ of slots can be obtained. In other words, $C = a_1 \times \beta_1 + a_2 \times \beta_2 + \cdots + a_n \times \beta_n$. Finally, each first basis coefficient $a_1, a_2, ..., a_n$ is determined based on the first quantity of slots and the quantity of slots, of the first basis, indicated by each type of first basis, so that slot allocation for the first service can be determined.

For example, the first total quantity of slots $P_1 = 10$, and the first palindromic sequence includes 10 first bases as shown in FIG. 4. Quantities of slots, of first bases, corresponding to all types of first bases are $\beta_1 = 1$, $\beta_2 = 1$, $\beta_3 = 3$, and $\beta_4 = 5$. For the first palindromic sequence, a quantity of slots that can be allocated may be represented as $C = a_1 \times \beta_1 + a_2 \times \beta_2 + a_3 \times \beta_3 + a_4 \times \beta_4$. If the first quantity of slots required by the first service $C_1 = 6$, the binary representation of the first quantity of slots may be $C_1 = 6 = 0 \times \beta_1 + 1 \times \beta_2 + 0 \times \beta_3 + 1 \times \beta_4$ or $C_1 = 6 = 1 \times \beta_1 + 0 \times \beta_2 + 0 \times \beta_3 + 1 \times \beta_4$. The first case is used as an example. As shown in FIG. 6, it may be determined, based on the first basis coefficient, that the first service occupies quantities of slots, of first bases, corresponding to the first bases $\beta_2$ and $\beta_4$ in the first palindromic sequence. Therefore, it can be determined that the quantities of slots, of the first bases, corresponding to the first bases $\beta_2$ and $\beta_4$ are to be allocated to the first service.

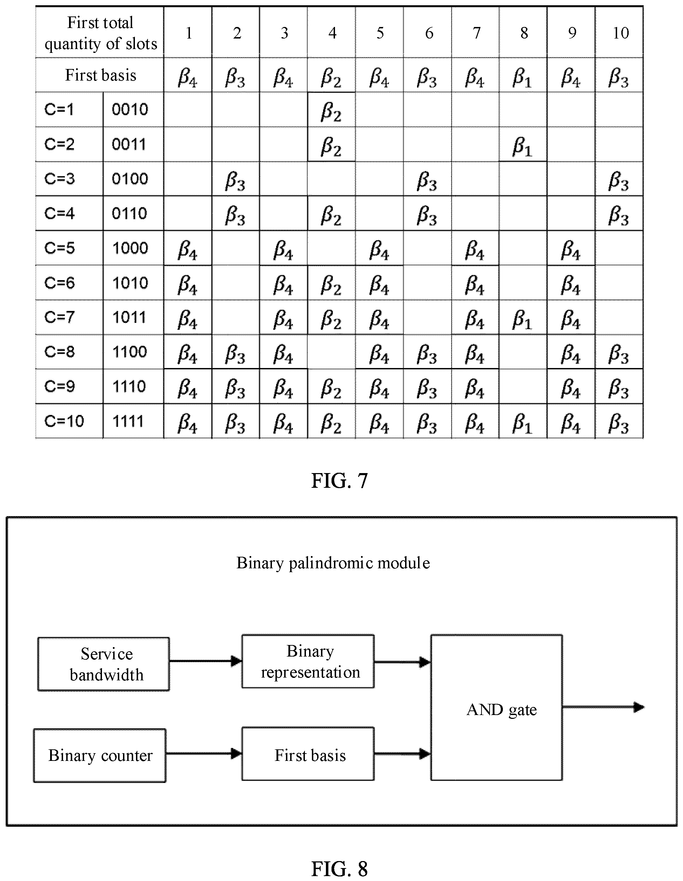

Further, as shown in FIG. 7, for a first palindromic sequence corresponding to the first total quantity of slots $P_1 = 10$, when different first services require different first quantities of slots, allocation can be completed according to the foregoing method.

Optionally, step S202 and step S203 may be simultaneously performed. A sequence of performing the steps is not limited in this embodiment of this application.

Specifically, as shown in FIG. 8, the slot allocation method is implemented in a binary palindromic module. The binary palindromic module includes a binary counter and an AND gate, and determines, based on service bandwidths that are input, namely, the first total quantity of slots and the first quantity of slots, the binary representation of the first quantity of slots based on the first total quantity of slots. At the same time, the binary counter outputs the first bases based on the first total quantity of slots, and implements an *AND* operation through the AND gate. In this way, occupancy by the first service in the first palindromic sequence is determined.

For example, when the first total quantity of slots $P_1 = 10$ and the first quantity of slots required by the first service $C_1 = 6$, a plurality of iterations are performed to determine the binary representation of the first quantity of slots based on the first total quantity $P_1$ of slots: $C_1 = 6 = 0 \times \beta_1 + 1 \times \beta_2 + 0 \times -\beta_3 + 1 \times \beta_4$. $C_1$ may be simplified as $C_1 = 1010$ by taking coefficients in the binary representation. Then, the binary counter increments, and outputs one first basis on each clock. When the binary counter increments from 0000 to 0001, there is no carry, and a first basis is a most significant bit. That is, $R = \beta_4 = 0 \times \beta_1 + 0 \times \beta_2 + 0 \times \beta_3 + 1 \times \beta_4$, which may be simplified as R = 1000. Through $R\ AND\ C = 1000\ AND\ 1010 = 1000$, it can be learned that the first service occupies a slot corresponding to a 1st first basis in the first palindromic sequence. When the binary counter increments from 0001 to 0010, there is a carry, and in this case, R = 0100. Through $R\ AND\ C = 0100\ AND\ 1010 = 0000$, it can be learned that the first service does not occupy a slot corresponding to a 2nd first basis in the first palindromic sequence. When the binary counter increments from 0010 to 0011, there is no carry, and R = 1000. Through $R\ AND\ C = 1000\ AND\ 1010 = 1000$, it can be learned that the first service occupies a slot corresponding to a 3rd first basis in the first palindromic sequence. When the binary counter increments from 0011 to 0100, there is a carry, and R = 0010. Through $R\ AND\ C = 0010\ AND\ 1010 = 0010$, it can be learned that the first service occupies a slot corresponding to a 4th first basis in the first palindromic sequence. Iterations are performed in this way until the binary counter increments from 1001 to a binary number 1010 corresponding to $P_1$. There is a carry, and R = 0100. Through $R\ AND\ C = 0100\ AND\ 1010 = 0000$, it can be learned that the first service does not occupy a slot corresponding to a 10th first basis in the first palindromic sequence. At the same time, the binary number of the binary counter is set to 0000. In this way, the occupancy by the first service in the first palindromic sequence is determined during determining of the first palindromic sequence, to complete slot allocation for the first service.

In this embodiment of this application, a quantity of bases in a palindromic sequence is the same as a total quantity of available slots. In other words, a length of the palindromic sequence is the same as the total quantity of slots. This resolves, in principle, a problem that a binary palindromic sequence cannot be in a one-to-one correspondence with a total quantity of resources, thereby expanding an application range of a binary palindromic algorithm. A slot allocation result obtained based on the palindromic sequence corresponds to the total quantity of slots. Therefore, there is no need to introduce an idle service or a queuing mechanism. This reduces hardware overheads generated during slot allocation.

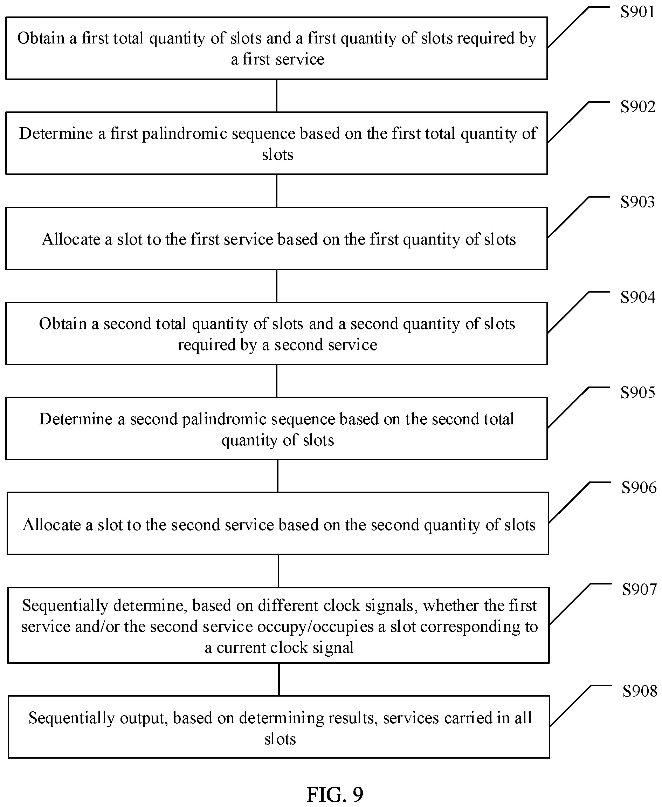

As shown in FIG. 9, based on the embodiment shown in FIG. 2, another embodiment of a slot allocation method provided in embodiments of this application includes the following steps.

S901: Obtain a first total quantity of slots and a first quantity of slots required by a first service.

An in-vehicle gateway of an in-vehicle network provides a communication interface. On the communication interface, $P_1$ slots are obtained through slot division. That is, the first total quantity of slots is $P_1$. Data exchange and communication for the first service are implemented through the communication interface. The first quantity $C_1$ of slots required by the first service further needs to be obtained, to allocate the slot on the communication interface to the first service.

S902: Determine a first palindromic sequence based on the first total quantity of slots.

The first palindromic sequence includes a plurality of first bases whose quantity is the same as the first total quantity of slots. Each type of first basis in the plurality of first bases indicates a quantity of slots of the first basis.

S903: Allocate a slot to the first service based on the first quantity of slots.

The first quantity of slots is represented as a sum of products of each type of first basis and a corresponding first basis coefficient. The first basis coefficient is used to determine the quantity of slots, of the first basis, to be occupied by the first service.

For specific implementations of step S901 to step S903 in this embodiment of this application, refer to the slot allocation method shown in FIG. 2. Details are not described again in this embodiment of this application.

S904: Obtain a second total quantity of slots and a second quantity of slots required by a second service.

Besides data exchange and communication for the first service, data exchange and communication for the second service are also implemented through the communication interface. The second quantity $C_2$ of slots required by the second service and the second total quantity $P_2$ of slots further need to be obtained, to complete allocating the slot on the communication interface to the first service and a slot on the communication interface to the second service. The second total quantity of slots is a difference between the first total quantity of slots and a quantity of slots allocated to the first service, that is, $P_2 = P_1 - C_1$.

Optionally, there are a plurality of second services. In this embodiment of this application, a serial architecture is used to implement even slot allocation for a plurality of services, that is, sequentially allocating slots to all the services based on a service sequence. It is assumed that a total quantity of slots provided by the communication interface is $P$, and quantities of slots required by a total of $N$ services ($S_1$, $S_2$, ..., and $S_N$) are $C_1$, $C_2$, ..., and $C_N$. $S_1$ is the first service, and $S_2$ to $S_N$ are $N$ - 1 second services. In this case, a quantity of slots that can be allocated to the first service $S_1$, namely, the first total quantity of slots, is $P_1 = P$; a quantity of slots that can be allocated to the second service $S_2$, namely, a second total quantity of slots, is $P_2 = P_1 - C_1$; ...; and a quantity of slots that can be allocated to the second service $S_N$, namely, a second total quantity of slots, is $P_N = P_{N-1} - C_{N-1}$.

According to the slot allocation method shown in FIG. 2, a binary representation that is of a second quantity $C_i$ of slots required by each second service $S_i$ and that is based on a second total quantity $P_i$ of slots, and a second palindromic sequence corresponding to the second total quantity $P_i$ of slots may be determined, to complete slot allocation for the second service $S_i$.

It should be noted that, because the in-vehicle network is static and the communication interface used by each service is planned in advance, $P_1 \geq C_1 + C_2 + ... + C_N$ is satisfied by design during planning, and a case in which $P_N = P_{N-1} - C_{N-1} < 0$ does not exist.

S905: Determine the second palindromic sequence based on the second total quantity of slots.

The second palindromic sequence includes a plurality of second bases whose quantity is the same as the second total quantity of slots. Each type of second basis in the plurality of second bases indicates a quantity of slots of the second basis.

S906: Allocate a slot to the second service based on the second quantity of slots.

The second quantity of slots is represented as a sum of products of each type of second basis and a corresponding second basis coefficient. The second basis coefficient is used to determine the quantity of slots, of the second basis, to be occupied by the second service.

For specific implementations of step S905 and step S906 in this embodiment of this application, refer to the slot allocation method shown in FIG. 2. Details are not described herein again in this embodiment of this application.

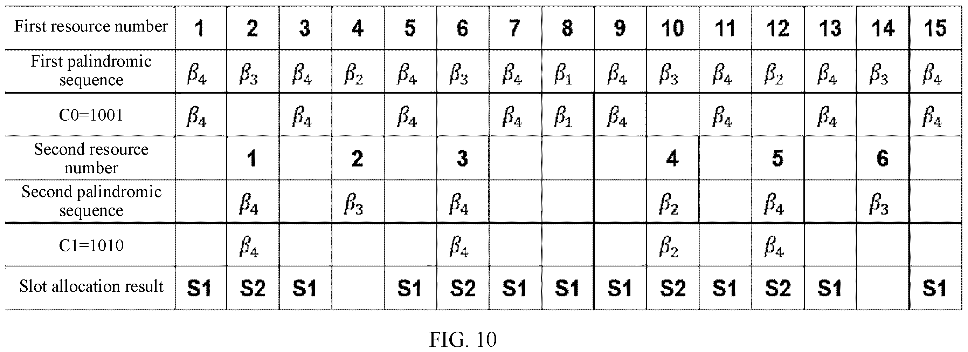

For example, as shown in FIG. 10, there is one second service, a total quantity of slots provided by the communication interface is $P = 15$, and the quantity of slots required by the first service and the quantity of slots required by the second service are respectively the first quantity of slots $C_1 = 9$ and $C_2 = 4$. In this case, a first total quantity of slots that can be allocated to the first service $S_1$ is $P_1 = P = 15$, and a second total quantity of slots that can be allocated to the second service $S_2$ is $P_2 = P_1 - C_1 = 6$. Slot allocation is performed first for the first service $S_1$, and then for the second service $S_2$. According to the slot allocation method shown in FIG. 3, the first quantity of slots of the first service $S_1$, namely, a value of $C_1$, may be represented as $C_1 = 1001$. Therefore, the first service $S_1$ occupies slots whose first resource numbers are 1, 3, 5, 7, 8, 9, 11, 13, and 15. A second palindromic sequence of the remaining second total quantity of slots $P_2 = 6$ may be represented as $\{\beta_4, \beta_3, \beta_4, \beta_2, \beta_4, \beta_3\}$, and quantities of slots, of second bases, indicated by the second bases of the second palindromic sequence are $\beta_4 = 3$, $\beta_3 = 2$, $\beta_2 = 1$, $and$ $\beta_1 = 0$. In this case, the second quantity of slots of the second service $S_2$, namely, a value of $C_2$, may be represented as $C_2 = 1010$. Therefore, the second service $S_2$ occupies slots whose

second resource numbers are 1, 3, 4, and 5 and that are in correspondence to slots whose first resource numbers are 2, 5, 10, and 12.

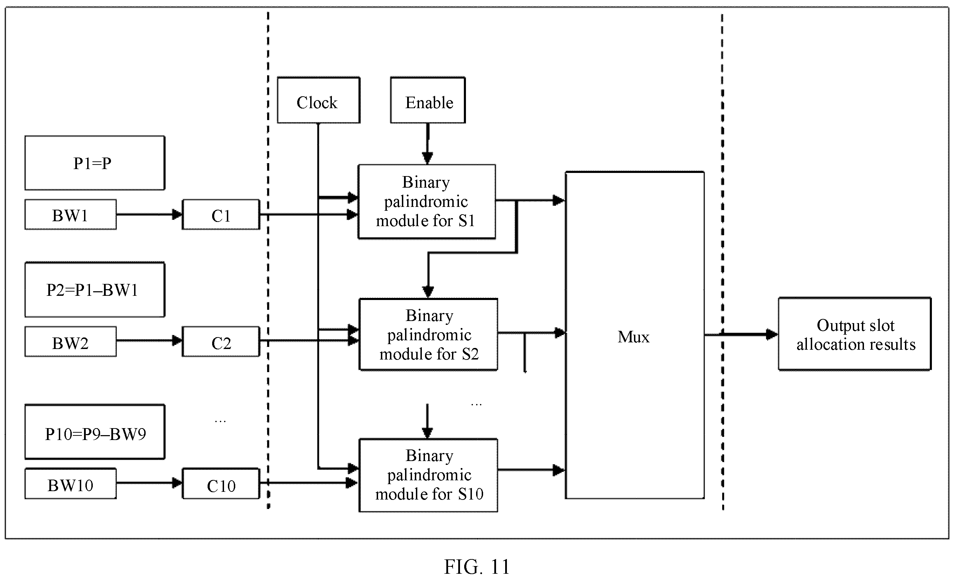

Optionally, as shown in FIG. 11, when slots are allocated to a plurality of services, occupancy by the service in a palindromic sequence may also be determined when the palindromic sequence is generated, to implement real-time slot allocation. Specifically, slot allocation is determined based on a binary palindromic serial architecture and based on a resource sequence and a service sequence. The binary palindromic serial architecture includes a plurality of binary palindromic modules shown in FIG. 8.

For example, a total quantity of slots is $P$, and quantities of slots required by $N = 10$ services ($S_1$, $S_2$, ..., and $S_N$) are respectively $BW_1$, $BW_2$, ..., and $BW_N$. Therefore, a first total quantity of slots $P_1 = P$ corresponding to the first service $S_1$, a second total quantity of slots $P_2 = P_1 - BW_1$ corresponding to the second service $S_2$, ..., and a second total quantity of slots $P_{10} = P_9 - BW_9$ corresponding to a second service $S_{10}$ may be determined. According to the slot allocation method shown in FIG. 3, the quantities of slots required by the $N = 10$ services may be converted into binary representations that are based on the corresponding total quantity of slots: $C_1$, $C_2$, ..., and $C_{10}$. This process may be implemented by software by using a preset mapping table. Each service corresponds to a binary palindromic module. Slot allocation is performed based on clocks and enable signals. The clocks are in a one-to-one correspondence with the slots. The enable signal is determined by a binary palindromic module for a previous service. If the previous service occupies a current slot, the enable signal is ineffective. If the previous service does not occupy a current slot, the enable signal is effective. Finally, a slot occupied by each service is determined, and is output by using a data selector (multiplexer, Mux).

S907: Sequentially determine, based on different clock signals, whether the first service and/or the second service occupy/occupies a slot corresponding to a current clock signal.

S908: Sequentially output, based on determining results, services carried in all slots.

Further, after the slots are allocated to the first service and the second service, slot allocation results need to be output. Specifically, whether the first service and/or the second service occupy/occupies the slot corresponding to the current clock signal is sequentially determined based on different clock signals, and the services carried in all the slots are sequentially output based on the determining result.

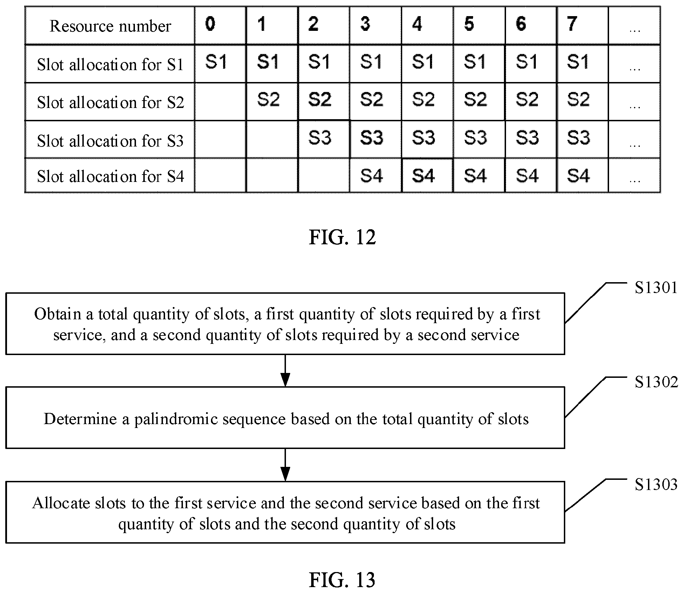

For example, a form of pipeline is used to ensure that each clock outputs a service carried in the current slot. As shown in FIG. 12, for $N = 4$ services ($S_1$, $S_2$, $S_3$, and $S_4$), in a first clock, a service $S_1$ determines whether to occupy a slot whose resource number is 1. In a second clock, the service $S_1$ determines whether to occupy a slot whose resource number is 2, and a service $S_2$ determines whether to occupy the slot whose resource number is 1. In a third clock, the service $S_1$ determines whether to occupy a slot whose resource number is 3, the service $S_2$ determines whether to occupy the slot whose resource number is 2, and a service $S_3$ determines whether to occupy a slot whose resource number is 1. In a fourth clock, the service $S_1$ determines whether to occupy a slot whose resource number is 4, the service $S_2$ determines whether to occupy the slot whose resource number is 3, the service $S_3$ determines whether to occupy the slot whose resource number is 2, and a service $S_4$ determines whether to occupy the slot whose resource number is 1. In a fifth clock, the service $S_1$ determines whether to occupy a slot whose resource number is 5, the service $S_2$ determines whether to occupy the slot whose resource number is 4, the service $S_3$ determines whether to occupy the slot whose resource number is 3, and the service $S_4$ determines whether to occupy the slot whose resource number is 2. In this way, a pipeline structure is formed. During output, a total quantity of the services is 4, and a service to which the slot whose resource number is 1 is allocated can be determined only after three clocks. Therefore, a slot allocation result of the service $S_1$ is output after a delay of three clocks, a slot allocation result of the service $S_2$ is output after a delay of two clocks, a slot allocation result of the service $S_3$ is output after a delay of one clock, and a slot allocation result of the service $S_4$ is output after a delay of zero clocks. In this way, it can be ensured that each clock outputs the service carried in the current slot.

In this embodiment of this application, the slot allocation method may be applied to slot allocation for the plurality of services, and slot allocation for the plurality of services is implemented based on the serial architecture. This avoids a problem that the plurality of services contend for a same slot resource, and facilitates implementation of slot allocation hardware. In addition, the slot allocation results are sequentially output by using the pipeline structure, so that it can be ensured that each clock outputs the service to which the current slot is allocated, to improve user experience.

As shown in FIG. 13, another embodiment of a slot allocation method provided in embodiments of this application includes the following steps.

S1301: Obtain a total quantity of slots, a first quantity of slots required by a first service, and a second quantity of slots required by a second service.

S1302: Determine a palindromic sequence based on the total quantity of slots.

The palindromic sequence includes a plurality of bases whose quantity is greater than or equal to a maximum quantity of slots. The maximum quantity of slots is a largest value between the first quantity of slots and the second quantity of slots. Each type of basis in the plurality of bases indicates a quantity of slots of the basis.

S1303: Allocate slots to the first service and the second service based on the first quantity of slots and the second quantity of slots.

The first quantity of slots and the second quantity of slots each are represented as a sum of products of each type of basis and a corresponding basis coefficient. The basis coefficient is used to determine a quantity of slots, of the basis, to be occupied by each of the first service and the second service.

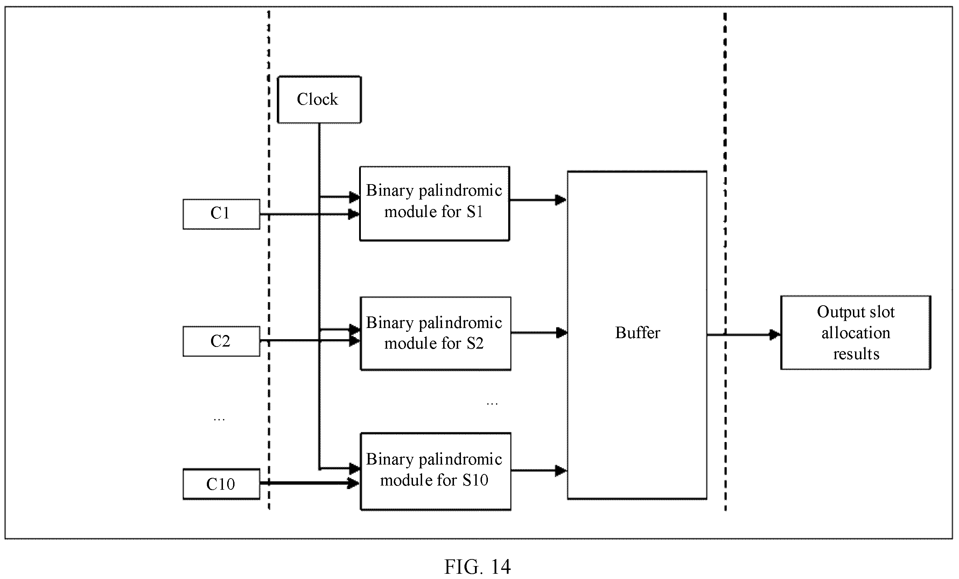

In this embodiment, as shown in FIG. 14, a binary palindromic parallel architecture is used to implement even resource allocation for a plurality of services. For a specific implementation thereof, refer to the foregoing embodiment. Details are not described herein in this embodiment of this application. A difference lies in that the first service and the second service share one palindromic sequence, and the quantity of the plurality of bases in the palindromic sequence is greater than or equal to the maximum quantity of slots. Because the architecture is a parallel architecture, a structure is simpler compared with that of the architecture shown in FIG. 11. A difference lies in that a plurality of slots may be required for one slot allocation result. Therefore, a queuing mechanism needs to be introduced to the binary palindromic parallel architecture. That is, a buffer is introduced, and no enable signal is required. After each binary palindromic module completes slot allocation, a sequence in which the plurality of services enter the buffer is determined based on an allocation result, and finally, slot allocation results of the plurality of services are output.

Some special requirements may be implemented in a more flexible manner by using the binary palindromic parallel architecture in this embodiment of this application. For example, when the quantity of the plurality of bases in the palindromic sequence is equal to the maximum quantity of slots, it can be ensured that, in each slot allocation result, a slot corresponding to each basis in the palindromic sequence is allocated to the service, to avoid introducing an idle service.

Optionally, in an actual process of determining the palindromic sequence, there are specifically two optional implementations, to be specific, determining the palindromic sequence by using a binary counter and determining the palindromic sequence by using a mapping table. Specifically, during determining of the palindromic sequence by using the binary counter, the binary counter is enabled to count from zero to the total quantity of slots, and the plurality of bases are output based on a carry result or a toggle result of the binary counter, to obtain the palindromic sequence. During determining of the palindromic sequence by using the mapping table, a preset slot-sequence mapping table is obtained. The slot-sequence mapping table includes a mapping relationship between the total quantity of slots and the palindromic sequence. The palindromic sequence is determined based on the total quantity of slots and the mapping relationship. For specific implementations thereof, refer to the descriptions corresponding to FIG. 6 and FIG. 7 in embodiments of this application. Details are not described in this embodiment of this application again.

In this embodiment of this application, the quantity of the plurality of bases in the palindromic sequence is greater than or equal to the maximum quantity of slots, a length $Q$ of the palindromic sequence is not limited by $Q = 2^n - 1$, and there is no need to introduce an idle service to the slot allocation result obtained based on the palindromic sequence. This reduces hardware overheads generated during slot allocation.

The foregoing describes the slot allocation method provided in embodiments of this application. The following describes a slot allocation system provided in embodiments of this application with reference to the accompanying drawings.

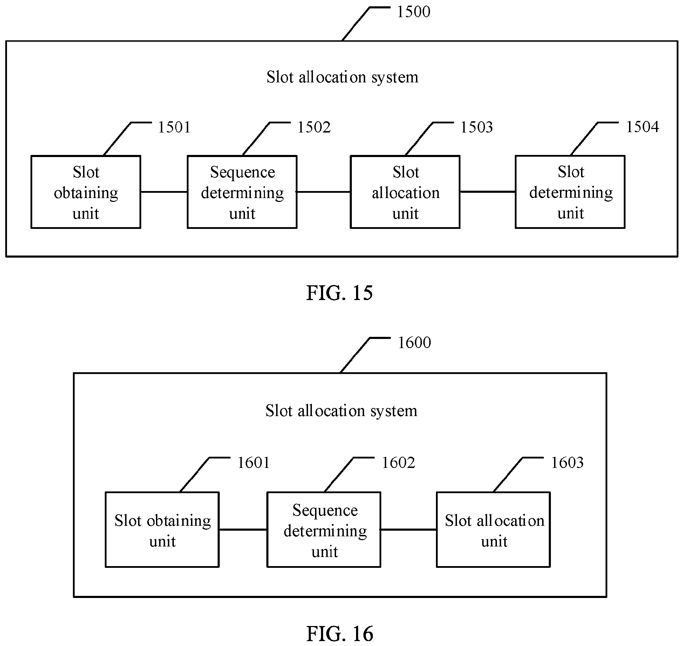

As shown in FIG. 15, an embodiment of a slot allocation system 1500 provided in embodiments of this application includes:

a slot obtaining unit 1501, configured to obtain a first total quantity of slots and a first quantity of slots required by a first service, where the slot obtaining unit 1501 may perform step S201 in the foregoing method embodiment;

a sequence determining unit 1502, configured to determine a first palindromic sequence based on the first total quantity of slots, where the first palindromic sequence includes a plurality of first bases whose quantity is the same as the first total quantity of slots, each type of first basis in the plurality of first bases indicates a quantity of slots of the first basis, and the sequence determining unit 1502 may perform step S202 in the foregoing method embodiment; and

a slot allocation unit 1503, configured to allocate a slot to the first service based on the first quantity of slots, where the first quantity of slots is represented as a sum of products of each type of first basis and a corresponding first basis coefficient, and the first basis coefficient is used to determine the quantity of slots, of the first basis, to be occupied by the first service. The slot allocation unit 1503 may perform step S203 in the foregoing method embodiment.

In this embodiment of this application, a quantity of bases in a palindromic sequence is the same as a total quantity of available slots. That is, a length of the palindromic sequence is the same as the total quantity of slots, and a slot allocation result obtained based on the palindromic sequence corresponds to the total quantity of slots. Therefore, there is no need to introduce an idle service or a queuing mechanism. This reduces hardware overheads generated during slot allocation.

Optionally, the sequence determining unit 1502 is specifically configured to: enable a binary counter to count from zero to the first total quantity of slots; and output the plurality of first bases based on a carry result or a toggle result of the binary counter, to obtain the first palindromic sequence.

Optionally, the sequence determining unit 1502 is specifically configured to: obtain a preset slot-sequence mapping table, where the slot-sequence mapping table includes a mapping relationship between the first total quantity of slots and the first palindromic sequence; and determine the first palindromic sequence based on the first total quantity of slots and the mapping relationship.

Optionally, the slot obtaining unit 1501 is further configured to obtain a second total quantity of slots and a second quantity of slots required by a second service. The second total quantity of slots is a difference between the first total quantity of slots and the first quantity of slots. The sequence determining unit 1502 is further configured to determine a second palindromic sequence based on the second total quantity of slots. The second palindromic sequence includes a plurality of second bases whose quantity is the same as the second total quantity of slots, and each type of second basis in the plurality of second bases indicates a quantity of slots of the second basis. The slot allocation unit 1503 is further configured to allocate a slot to the second service based on the second quantity of slots. The second quantity of slots is represented as a sum of products of each type of second basis and a corresponding second basis coefficient. The second basis coefficient is used to determine the quantity of slots, of the second basis, to be occupied by the second service.

Optionally, the slot allocation system 1500 further includes:

a slot determining unit 1504, configured to: sequentially determine, based on different clock signals, whether the first service and/or the second service occupy/occupies a slot corresponding to a current clock signal; and sequentially output, based on determining results, services carried in all slots.

For understanding of the slot allocation system 1500 provided in this embodiment of this application, refer to corresponding content in the foregoing slot allocation method embodiments. Details are not described herein again.

As shown in FIG. 16, another embodiment of a slot allocation system 1600 provided in embodiments of this application includes:

a slot obtaining unit 1601, configured to obtain a total quantity of slots, a first quantity of slots required by a first service, and a second quantity of slots required by a second service, where the slot obtaining unit 1601 may perform step S1301 in the foregoing method embodiment;
a sequence determining unit 1602, configured to determine a palindromic sequence based on the total quantity of slots, where the palindromic sequence includes a plurality of bases whose quantity is greater than or equal to a maximum quantity of slots, the maximum quantity of slots is a largest value between the first quantity of slots and the second quantity of slots, each type of basis in the plurality of bases indicates a quantity of slots of the basis, and the sequence determining unit 1602 may perform step S1302 in the foregoing method embodiment; and
a slot allocation unit 1603, configured to allocate slots to the first service and the second service based on the first quantity of slots and the second quantity of slots, where the first quantity of slots and the second quantity of slots are represented as a sum of products of each type of basis and a corresponding basis coefficient, and the basis coefficient is used to determine the quantity of slots, of the basis, to be occupied by each of the first service and the second service. The slot allocation unit 1603 may perform step S1303 in the foregoing method embodiment.

In this embodiment of this application, the quantity of the plurality of bases in the palindromic sequence is greater than or equal to the maximum quantity of slots, a length $Q$ of the palindromic sequence is not limited by $Q = 2^n - 1$, and there is no need to introduce an idle service to a slot allocation result obtained based on the palindromic sequence. This reduces hardware overheads generated during slot allocation.

Optionally, the sequence determining unit 1602 is specifically configured to: enable a binary counter to count from zero to the total quantity of slots; and output the plurality of bases based on a carry result or a toggle result of the binary counter, to obtain the palindromic sequence.

Optionally, the sequence determining unit 1602 is specifically configured to: obtain a preset slot-sequence mapping table, where the slot-sequence mapping table includes a mapping relationship between the total quantity of slots and the palindromic sequence; and determine the palindromic sequence based on the total quantity of slots and the mapping relationship.

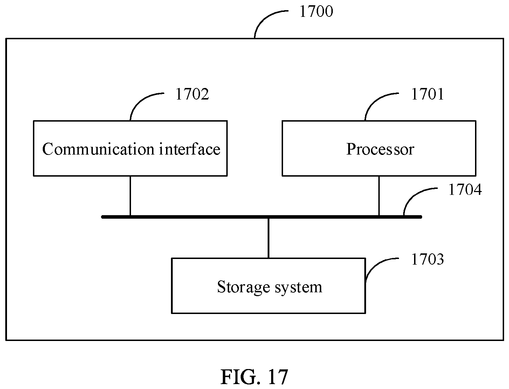

FIG. 17 is a diagram of a possible logical structure of a computer device 1700 according to an embodiment of this application. The computer device 1700 includes a processor 1701, a communication interface 1702, a storage system 1703, and a bus 1704. The processor 1701, the communication interface 1702, and the storage system 1703 are connected to each other through the bus 1704. In this embodiment of this application, the processor 1701 is configured to control and manage an action of the computer device 1700. For example, the processor 1701 is configured to perform the slot allocation method described in a part of embodiments of FIG. 2 to FIG. 12, or FIG. 13 to FIG. 14. The communication interface 1702 is configured to support the computer device 1700 for communication. The storage system 1703 is configured to store program code and data of the computer device 1700.

The processor 1701 may be a central processing unit, a general-purpose processor, a digital signal processor, an application-specific integrated circuit, a field programmable gate array or another programmable logic device, a transistor logic device, a hardware component, or any combination thereof. The processor 1701 may implement or execute various example logical blocks, modules, and circuits described with reference to content disclosed in this application. Alternatively, the processor 1701 may be a combination for implementing a computing function, for example, a combination including one or more microprocessors, or a combination of a digital signal processor and a microprocessor. The bus 1704 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line indicates the bus in FIG. 17, but this does not mean that there is only one bus or only one type of bus.

In another embodiment of this application, a computer-readable storage medium is further provided. The computer-readable storage medium stores computer-executable instructions. When at least one processor of a device executes the computer-executable instructions, the device performs the slot allocation method described in a part of embodiments of FIG. 2 to FIG. 12, or FIG. 13 to FIG. 14.

In another embodiment of this application, a computer program product is further provided. The computer program product includes computer-executable instructions. The computer-executable instructions are stored in a computer-readable storage medium. At least one processor of a device may read the computer-executable instructions from the computer-readable storage medium. When the at least one processor executes the computer-executable instructions, the device performs the slot allocation method described in a part of embodiments of FIG. 2 to FIG. 12, or FIG. 13 to FIG. 14.

In another embodiment of this application, a chip system is further provided. The chip system includes at least one processor and an interface. The interface is configured to receive data and/or a signal. The at least one processor is configured to support implementation of the slot allocation method described in a part of embodiments of FIG. 2 to FIG. 12, or FIG. 13 to FIG. 14. In a possible design, the chip system further includes a memory. The memory is configured to store program instructions and data that are necessary for a computer device. The chip system may include a chip, or may include a chip and another discrete device.

It may be clearly understood by a person skilled in the art that, for the purpose of convenient and brief description, for a detailed working process of the foregoing system, system, and unit, refer to a corresponding process in the foregoing method embodiments, and details are not described herein again.

In several embodiments provided in this application, it should be understood that the disclosed system, system, and method may be implemented in another manner. For example, the described system embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, systems or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A slot allocation method, comprising:

   obtaining a first total quantity of slots and a first quantity of slots required by a first service;
   determining a first palindromic sequence based on the first total quantity of slots, wherein the first palindromic sequence comprises a plurality of first bases whose quantity is the same as the first total quantity of slots, and each type of first basis in the plurality of first bases indicates a quantity of slots of the first basis; and
   allocating a slot to the first service based on the first quantity of slots, wherein the first quantity of slots is represented as a sum of products of each type of first basis and a corresponding first basis coefficient, and the first basis coefficient is used to determine the quantity of slots, of the first basis, to be occupied by the first service.

2. The method according to claim 1, wherein the determining a first palindromic sequence based on the first total quantity of slots comprises:

enabling a binary counter to count from zero to the first total quantity of slots; and
outputting the plurality of first bases based on a carry result or a toggle result of the binary counter, to obtain the first palindromic sequence.

3. The method according to claim 1, wherein the determining a first palindromic sequence based on the first total quantity of slots comprises:

obtaining a preset slot-sequence mapping table, wherein the slot-sequence mapping table comprises a mapping relationship between the first total quantity of slots and the first palindromic sequence; and
determining the first palindromic sequence based on the first total quantity of slots and the mapping relationship.

4. The method according to any one of claims 1 to 3, wherein after the allocating a slot to the first service based on the first quantity of slots, the method further comprises:

obtaining a second total quantity of slots and a second quantity of slots required by a second service, wherein the second total quantity of slots is a difference between the first total quantity of slots and the first quantity of slots; determining a second palindromic sequence based on the second total quantity of slots, wherein the second palindromic sequence comprises a plurality of second bases whose quantity is the same as the second total quantity of slots, and each type of second basis in the plurality of second bases indicates a quantity of slots of the second basis; and
allocating a slot to the second service based on the second quantity of slots, wherein the second quantity of slots is represented as a sum of products of each type of second basis and a corresponding second basis coefficient, and the second basis coefficient is used to determine the quantity of slots, of the second basis, to be occupied by the second service.

5. The method according to claim 4, wherein the method further comprises:

sequentially determining, based on different clock signals, whether the first service and/or the second service occupy/occupies a slot corresponding to a current clock signal; and
sequentially outputting, based on determining results, services carried in all slots.

6. A slot allocation method, comprising:

obtaining a total quantity of slots, a first quantity of slots required by a first service, and a second quantity of slots required by a second service;
determining a palindromic sequence based on the total quantity of slots, wherein the palindromic sequence comprises a plurality of bases whose quantity is greater than or equal to a maximum quantity of slots, the maximum quantity of slots is a largest value between the first quantity of slots and the second quantity of slots, and each type of basis in the plurality of bases indicates a quantity of slots of the basis; and
allocating slots to the first service and the second service based on the first quantity of slots and the second quantity of slots, wherein the first quantity of slots and the second quantity of slots each are represented as a sum of products of each type of basis and a corresponding basis coefficient, and the basis coefficient is used to determine the quantity of slots, of the basis, to be occupied by each of the first service and the second service.

7. The method according to claim 6, wherein the determining a palindromic sequence based on the total quantity of slots comprises:

enabling a binary counter to count from zero to the total quantity of slots; and
outputting the plurality of bases based on a carry result or a toggle result of the binary counter, to obtain the palindromic sequence.

8. The method according to claim 6, wherein the determining a palindromic sequence based on the total quantity of slots comprises:

obtaining a preset slot-sequence mapping table, wherein the slot-sequence mapping table comprises a mapping relationship between the total quantity of slots and the palindromic sequence; and
determining the palindromic sequence based on the total quantity of slots and the mapping relationship.

9. A slot allocation system, comprising:

a slot obtaining unit, configured to obtain a first total quantity of slots and a first quantity of slots required by a first service;
a sequence determining unit, configured to determine a first palindromic sequence based on the first total quantity of slots, wherein the first palindromic sequence comprises a plurality of first bases whose quantity is the same as the first total quantity of slots, and each type of first basis in the plurality of first bases indicates a quantity of slots of the first basis; and
a slot allocation unit, configured to allocate a slot to the first service based on the first quantity of slots, wherein the first quantity of slots is represented as a sum of products of each type of first basis and a corresponding first basis coefficient, and the first basis coefficient is used to determine the quantity of slots, of the first basis, to be occupied by the first service.

10. The system according to claim 9, wherein the sequence determining unit is specifically configured to: enable a binary counter to count from zero to the first total quantity of slots; and output the plurality of first bases based on a carry result or a toggle result of the binary counter, to obtain the first palindromic sequence.

11. The system according to claim 9, wherein the sequence determining unit is specifically configured to: obtain a preset slot-sequence mapping table, wherein the slot-sequence mapping table comprises a mapping relationship between the first total quantity of slots and the first palindromic sequence; and determine the first palindromic sequence based on the first total quantity of slots and the mapping relationship.

12. The system according to any one of claims 9 to 11, wherein

the slot obtaining unit is further configured to obtain a second total quantity of slots and a second quantity of slots required by a second service, wherein the second total quantity of slots is a difference between the first total quantity of slots and the first quantity of slots; and
the sequence determining unit is further configured to determine a second palindromic sequence based on the second total quantity of slots, wherein the second palindromic sequence comprises a plurality of second bases whose quantity is the same as the second total quantity of slots, and each type of second basis in the plurality of second bases indicates a quantity of slots of the second basis; and
the slot allocation unit is further configured to allocate a slot to the second service based on the second quantity of slots, wherein the second quantity of slots is represented as a sum of products of each type of second basis and a corresponding second basis coefficient, and the second basis coefficient is used to determine the quantity of slots, of the second basis, to be occupied by the second service.

13. The system according to claim 12, wherein the system further comprises:
a slot judging unit, configured to: sequentially determine, based on different clock signals, whether the first service and/or the second service occupy/occupies a slot corresponding to a current clock signal; and sequentially output, based on determining results, services carried in all slots.

14. A slot allocation system, comprising:

a slot obtaining unit, configured to obtain a total quantity of slots, a first quantity of slots required by a first service, and a second quantity of slots required by a second service;
a sequence determining unit, configured to determine a palindromic sequence based on the total quantity of slots, wherein the palindromic sequence comprises a plurality of bases whose quantity is greater than or equal to a maximum quantity of slots, the maximum quantity of slots is a largest value between the first quantity of slots and the second quantity of slots, and each type of basis in the plurality of bases indicates a quantity of slots of the basis; and
a slot allocation unit, configured to allocate slots to the first service and the second service based on the first quantity of slots and the second quantity of slots, wherein the first quantity of slots and the second quantity of slots are represented as a sum of products of each type of basis and a corresponding basis coefficient, and the basis coefficient is used to determine the quantity of slots, of the basis, to be occupied by each of the first service and the second service.

15. The system according to claim 14, wherein the sequence determining unit is specifically configured to: enable a binary counter to count from zero to the total quantity of slots; and output the plurality of bases based on a carry result or a toggle result of the binary counter, to obtain the palindromic sequence.

16. The system according to claim 14, wherein the sequence determining unit is specifically configured to: obtain a preset slot-sequence mapping table, wherein the slot-sequence mapping table comprises a mapping relationship between the total quantity of slots and the palindromic sequence; and determine the palindromic sequence based on the total quantity of slots and the mapping relationship.

17. A computer device, comprising a processor, a communication interface, and a memory, wherein the memory is configured to store program code, and the processor is configured to invoke the program code in the memory, so that the processor performs the method according to any one of claims 1 to 5 or claims 6 to 8.

18. A computer-readable storage medium, wherein the computer-readable storage medium stores computer-executable instructions; and when the computer-executable instructions are executed by a processor, the method according to any one of claims 1 to 5 or claims 6 to 8 is implemented.

19. A chip system, comprising at least one processor and an interface, wherein the interface is configured to receive data and/or a signal, and the at least one processor is configured to perform the method according to any one of claims 1 to 5 or claims 6 to 8.

FIG. 1

FIG. 2

| $\beta_4$ | $\beta_3$ | $\beta_4$ | $\beta_2$ | $\beta_4$ | $\beta_3$ | $\beta_4$ | $\beta_1$ | $\beta_4$ | $\beta_3$ | $\beta_4$ | $\beta_2$ | $\beta_4$ | $\beta_3$ | $\beta_4$ |
|---|---|---|---|---|---|---|---|---|---|---|---|---|---|---|

FIG. 3

| $\beta_4$ | $\beta_3$ | $\beta_4$ | $\beta_2$ | $\beta_4$ | $\beta_3$ | $\beta_4$ | $\beta_1$ | $\beta_4$ | $\beta_3$ | | | | | |
|---|---|---|---|---|---|---|---|---|---|---|---|---|---|---|

FIG. 4

| Binary number | Carry result | Toggle result | Output basis |
|---|---|---|---|
| 0000 | - | - | |
| 0001 | 0000 | 0001 | $\beta_4$ |
| 0010 | 0010 | 0010 | $\beta_3$ |
| 0011 | 0000 | 0001 | $\beta_4$ |
| 0100 | 0100 | 0100 | $\beta_2$ |
| 0101 | 0000 | 0001 | $\beta_4$ |
| 0110 | 0010 | 0010 | $\beta_3$ |
| 0111 | 0000 | 0001 | $\beta_4$ |
| 1000 | 1000 | 1000 | $\beta_1$ |
| 1001 | 0000 | 0001 | $\beta_4$ |
| 1010 | 0010 | 0010 | $\beta_3$ |
| 1011 | 0000 | 0001 | $\beta_4$ |
| 1100 | 0100 | 0100 | $\beta_2$ |
| 1101 | 0000 | 0001 | $\beta_4$ |
| 1110 | 0010 | 0010 | $\beta_3$ |
| 1111 | 0000 | 0001 | $\beta_4$ |

FIG. 5

| First total quantity of slots | | 1 | 2 | 3 | 4 | 5 | 6 | 7 | 8 | 9 | 10 |
|---|---|---|---|---|---|---|---|---|---|---|---|
| First basis | | $\beta_4$ | $\beta_3$ | $\beta_4$ | $\beta_2$ | $\beta_4$ | $\beta_3$ | $\beta_4$ | $\beta_1$ | $\beta_4$ | $\beta_3$ |
| C=6 | 1010 | $\beta_4$ | | $\beta_4$ | $\beta_2$ | $\beta_4$ | | $\beta_4$ | | $\beta_4$ | |

FIG. 6

| First total quantity of slots | | 1 | 2 | 3 | 4 | 5 | 6 | 7 | 8 | 9 | 10 |
|---|---|---|---|---|---|---|---|---|---|---|---|
| First basis | | $\beta_4$ | $\beta_3$ | $\beta_4$ | $\beta_2$ | $\beta_4$ | $\beta_3$ | $\beta_4$ | $\beta_1$ | $\beta_4$ | $\beta_3$ |
| C=1 | 0010 | | | | $\beta_2$ | | | | | | |
| C=2 | 0011 | | | | $\beta_2$ | | | | $\beta_1$ | | |
| C=3 | 0100 | | $\beta_3$ | | | | $\beta_3$ | | | | $\beta_3$ |
| C=4 | 0110 | | $\beta_3$ | | $\beta_2$ | | $\beta_3$ | | | | $\beta_3$ |
| C=5 | 1000 | $\beta_4$ | | $\beta_4$ | | $\beta_4$ | | $\beta_4$ | | $\beta_4$ | |
| C=6 | 1010 | $\beta_4$ | | $\beta_4$ | $\beta_2$ | $\beta_4$ | | $\beta_4$ | | $\beta_4$ | |
| C=7 | 1011 | $\beta_4$ | | $\beta_4$ | $\beta_2$ | $\beta_4$ | | $\beta_4$ | $\beta_1$ | $\beta_4$ | |
| C=8 | 1100 | $\beta_4$ | $\beta_3$ | $\beta_4$ | | $\beta_4$ | $\beta_3$ | $\beta_4$ | | $\beta_4$ | $\beta_3$ |
| C=9 | 1110 | $\beta_4$ | $\beta_3$ | $\beta_4$ | $\beta_2$ | $\beta_4$ | $\beta_3$ | $\beta_4$ | | $\beta_4$ | $\beta_3$ |
| C=10 | 1111 | $\beta_4$ | $\beta_3$ | $\beta_4$ | $\beta_2$ | $\beta_4$ | $\beta_3$ | $\beta_4$ | $\beta_1$ | $\beta_4$ | $\beta_3$ |

FIG. 7

FIG. 8

Obtain a first total quantity of slots and a first quantity of slots required by a first service — S901

Determine a first palindromic sequence based on the first total quantity of slots — S902

Allocate a slot to the first service based on the first quantity of slots — S903

Obtain a second total quantity of slots and a second quantity of slots required by a second service — S904

Determine a second palindromic sequence based on the second total quantity of slots — S905

Allocate a slot to the second service based on the second quantity of slots — S906

Sequentially determine, based on different clock signals, whether the first service and/or the second service occupy/occupies a slot corresponding to a current clock signal — S907

Sequentially output, based on determining results, services carried in all slots — S908

FIG. 9

| First resource number | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| First palindromic sequence | $\beta_4$ | $\beta_3$ | $\beta_4$ | $\beta_2$ | $\beta_4$ | $\beta_3$ | $\beta_4$ | $\beta_1$ | $\beta_4$ | $\beta_3$ | $\beta_4$ | $\beta_2$ | $\beta_4$ | $\beta_3$ | $\beta_4$ |
| C0=1001 | $\beta_4$ | | $\beta_4$ | | $\beta_4$ | | $\beta_4$ | $\beta_1$ | $\beta_4$ | | $\beta_4$ | | $\beta_4$ | | $\beta_4$ |
| Second resource number | | 1 | | 2 | | 3 | | | | 4 | | 5 | | 6 | |
| Second palindromic sequence | | $\beta_4$ | | $\beta_3$ | | $\beta_4$ | | | | $\beta_2$ | | $\beta_4$ | | $\beta_3$ | |
| C1=1010 | | $\beta_4$ | | | | $\beta_4$ | | | | $\beta_2$ | | $\beta_4$ | | | |
| Slot allocation result | S1 | S2 | S1 | | S1 | S2 | S1 | S1 | S1 | S2 | S1 | S2 | S1 | | S1 |

FIG. 10

FIG. 11

| Resource number | 0 | 1 | 2 | 3 | 4 | 5 | 6 | 7 | ... |
|---|---|---|---|---|---|---|---|---|---|
| Slot allocation for S1 | S1 | S1 | S1 | S1 | S1 | S1 | S1 | S1 | ... |
| Slot allocation for S2 | | S2 | S2 | S2 | S2 | S2 | S2 | S2 | ... |
| Slot allocation for S3 | | | S3 | S3 | S3 | S3 | S3 | S3 | ... |
| Slot allocation for S4 | | | | S4 | S4 | S4 | S4 | S4 | ... |

FIG. 12

Obtain a total quantity of slots, a first quantity of slots required by a first service, and a second quantity of slots required by a second service — S1301

Determine a palindromic sequence based on the total quantity of slots — S1302

Allocate slots to the first service and the second service based on the first quantity of slots and the second quantity of slots — S1303

FIG. 13

FIG. 14

1500

Slot allocation system

1501

Slot
obtaining
unit

1502

Sequence
determining
unit

1503

Slot
allocation
unit

1504

Slot
determining
unit

FIG. 15

1600

Slot allocation system

1601

Slot obtaining
unit

1602

Sequence
determining
unit

1603

Slot allocation
unit

FIG. 16

1700

Communication interface — 1702

Processor — 1701

1704

Storage system — 1703

FIG. 17

<div align="center">

**INTERNATIONAL SEARCH REPORT**

</div>

| | International application No. |
|---|---|
| | **PCT/CN2023/081247** |

**A. CLASSIFICATION OF SUBJECT MATTER**

H04J 3/16(2006.01)i

According to International Patent Classification (IPC) or to both national classification and IPC

**B. FIELDS SEARCHED**

Minimum documentation searched (classification system followed by classification symbols)

IPC:H04J H04L

Documentation searched other than minimum documentation to the extent that such documents are included in the fields searched

Electronic data base consulted during the international search (name of data base and, where practicable, search terms used)

CNTXT, ENTXTC, CJFD, CNKI, IEEE: 时隙, slot, 资源, resource, 分配, allocat+, 业务, business, 个数, 数量, number, 回文, palindromic, 序列, sequence, 基底, substrate

**C. DOCUMENTS CONSIDERED TO BE RELEVANT**

| Category* | Citation of document, with indication, where appropriate, of the relevant passages | Relevant to claim No. |
|---|---|---|
| X | CN 112866138 A (HUAWEI TECHNOLOGIES CO., LTD.) 28 May 2021 (2021-05-28) description, paragraphs 142-380 | 1-19 |
| A | CN 114095950 A (HUAWEI TECHNOLOGIES CO., LTD.) 25 February 2022 (2022-02-25) entire document | 1-19 |
| A | CN 111327391 A (SANECHIPS TECHNOLOGY CO., LTD.) 23 June 2020 (2020-06-23) entire document | 1-19 |
| A | WO 2020147661 A1 (ZTE CORP.) 23 July 2020 (2020-07-23) entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 May 2023** | **10 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/081247**

| Patent document cited in search report | | | Publication date (day/month/year) | Patent family member(s) | | | Publication date (day/month/year) |
|---|---|---|---|---|---|---|---|
| CN | 112866138 | A | 28 May 2021 | WO | 2021104168 | A1 | 03 June 2021 |
| CN | 114095950 | A | 25 February 2022 | WO | 2022042207 | A1 | 03 March 2022 |
| CN | 111327391 | A | 23 June 2020 | WO | 2020125648 | A1 | 25 June 2020 |
| WO | 2020147661 | A1 | 23 July 2020 | CN | 111435898 | A | 21 July 2020 |

Form PCT/ISA/210 (patent family annex) (July 2022)

**REFERENCES CITED IN THE DESCRIPTION**

**Patent documents cited in the description**

• CN 202210454858X